# EUROPEAN PATENT SPECIFICATION

(11) **EP 4 686 435 B1**
(45) Date of publication and mention of the grant of the patent: **26.08.2026**
(21) Application number: 24191823.4
(22) Date of filing: 30.07.2024
(51) Int. Cl.: A47J 27/14, A47J 27/00, A47J 27/56, A47J 36/32, A47J 27/62, A47J 36/00

(54) **A MULTIFUNCTIONAL STATIONARY BOILING PAN**
MULTIFUNKTIONELLE STATIONÄRE KOCHPFANNE
CASSEROLE D'ÉBULLITION STATIONNAIRE MULTIFONCTIONNELLE

(43) Date of publication of application: 04.02.2026
(73) Proprietor: Log-iQ s.r.o., 71900 Ostrava (CZ)
(72) Inventor: Chromek, Michal, 73532 Rychvald (CZ); Valek, Jiri, 70800 Ostrava (CZ)
(74) Representative: Kendereski, Dusan

(56) References cited:
- EP-A1- 1 914 479
- EP-A1- 3 583 871
- IT-A1- VR20 100 028
- JP-A- S60 207 622
- US-A- 5 942 269
- US-A1- 2020 077 837
- US-B2- 9 226 609

## Description

### Field of technology

The present invention relates to a multifunctional stationary boiling pan with a function for preventing food from spilling into a waste outlet.

### Background of the invention

In prior art, multifunctional stationary boiling pans are known, comprising: a boiling vessel defined by a bottom and side walls; a waste outlet; a food outlet; a lid for enclosing the boiling vessel; a heating element for heating the boiling vessel; and a control unit.

Due to hygiene reasons, the waste outlet must be closed when preparing food so that the food does not escape into the sewer and is not contaminated by any backflow of sewer contents into the cooking vessel in the event of a sewer failure. Well-known multifunctional stationary boiling pans usually have manual controls for opening and closing the waste outlet. The disadvantage of manual control is the risk of human error, where the operator accidentally opens the waste outlet while food is in the cooking vessel, which usually results in spoilage.

In addition, waste lines and drains are usually adapted for hot water flow, but not for hot oil flow, which can damage waste lines. Another disadvantage of manual operation is the risk of human error when the operator accidentally opens the waste outlet when hot oil is in the cooking vessel, which usually damages the sewer.

"Multifunctional stationary boiling pan" means a heatable cooking vessel which cannot be unloaded by tilting, typically used in catering, e.g. with the function of a frying pan, duplicator boiling pan, fryer, grill, sous-vide boiling pan, with a cooking temperature range of 30 to 250 °C.

"Ingredient" means any substance for preparing a dish (e.g. water, fat, milk, dry ingredients, meat, dairy products, vegetables, fruit, etc.). "Food" means at least one ingredient heat-treated by a multifunctional stationary boiling pan.

The Italian patent application IT VR 20100028 A1 discloses (see Fig. 1, 3, page 6, line 21-27 and page 7, line 9-12 of said document) a cooking device optimising its operation and management, comprising: a cooking tank defined by a bottom and side walls; a discharge conduit; a food outlet (by recovering food from the top of the cooking tank); a lid (disclosed as "access element") for enclosing the cooking tank; a heating means for heating the cooking tank; a main power supply; a control unit; and a controllable electric valve. Said document further discloses a method for preparing food by said cooking device by means of the control unit giving commands to the controllable electric valve. Said cooking device is not suitable for discharging mechanical particles as electric valves generally comprise a narrow passage in a discharge pipe in the valve area. Said document does not disclose any multifunctional method for preparing food by said cooking device, allowing for discharging mechanical particles.

The European patent application EP 3583871 A1 discloses (see Fig. 1, 2, 4, claim 1 and par. 0022, 0027, 0042 of said document) a pasta cooking appliance for reducing its recovery time and power consumption after water boiling over, comprising: an open-top cooking basin defined by a bottom and side walls; a drain line; a food outlet (by recovering food from the top of the pasta cooking appliance); a heating element for heating the cooking basin; an electric power unit; an electronic control unit; and a mechanical discharge valve. Said pasta cooking appliance does not comprise any lid or any connectivity of the discharge valve with the control unit. Said document further discloses a method for preparing food by said pasta cooking appliance, comprising the steps of: heating-up and detecting water in boil-over conditions or close to boil-over conditions; blowing an air jet towards the surface of the water contained in the cooking basin; and optionally reducing or stopping heating-up of water by means of the electronic control unit. Said document does not disclose any method for preparing food by said pasta cooking appliance, allowing for discharging mechanical particles.

The US patent application US 2020077837 A1 discloses (see Fig. 1, 2, par. 0012 and claim 1 of said document) a multifunctional stationary boiling pan for detecting a possibility of a vessel's content boiling over and for preventing said boiling over. The multifunctional stationary boiling pan comprises: a cooking vessel defined by a bottom and side walls; a waste and food outlet (by recovering waste and food from the top of the cooking vessel); a lid for enclosing the cooking vessel; a heating element for heating the cooking vessel; a main power supply; and a control unit. Said document further discloses a method for preparing food by said multifunctional stationary boiling pan, comprising the steps of: inserting at least one ingredient into the cooking vessel and setting a cooking program in the control unit; and starting the cooking program by the control unit and switching on the heating element. Disadvantageously, the multifunctional stationary boiling pan does not comprise any discharge valve.

The European patent application EP 1914479 A1 discloses (see Fig. 3, 5 and par. 0032, 0035, 0055, 0068 of said document) a heating cooker, comprising: a cooking vessel defined by a bottom and side walls; a steam generator for vaporising water, comprising a waste outlet; a food outlet (by recovering food by opening a door; a lid for enclosing the cooking vessel; a heating element for heating the cooking vessel; a main power supply; and a control unit. The steam generator comprises a waste outlet comprising a generic drain valve. Said document further discloses a method for generating steam by said heating cooker, comprising the steps of: inserting at least one ingredient (water) into the cooking vessel and setting a cooking program in the control unit; starting the cooking program by the control unit and switching on the heating element; and locking the drain valve in the closed position for the duration of food preparation. In addition, said document also discloses a step of measuring the temperature of the ingredient with a temperature sensor, wherein if the temperature of the ingredient exceeds a specified temperature, the drain valve is blocked in the closed position after the cooking program has finished. Said document does not disclose any method for preparing food by said heating cooker, allowing for discharging mechanical particles.

The US patent US 9226609 B2 discloses (see Fig. 1, 2 and column 4, line 53-58 of said document) a generic discharge valve for emptying a cooking vessel.

The US patent US 5942269 A discloses (see Fig. 1a and column 5, line 6-23 of said document) an electromechanical, motorised drain valve (ball-type or solenoid-type) for draining a frypot.

The Japanese patent JP S60207622 A discloses (see Fig. 1 of said document) an electromechanical discharge valve, controllable by two relays, for emptying a cooking pot.

Thus, in the prior art, there is a need for, and the object of the invention is to provide a multifunctional stationary boiling pan meeting high hygienic and safety working standards.

### Summary of the invention

The object of the invention is achieved by a multifunctional stationary boiling pan according to claim 1, comprising: a cooking vessel defined by a bottom and side walls; a waste outlet; a food outlet; a lid for enclosing the cooking vessel; a heating element for heating the cooking vessel; a main power supply; and a control unit. The waste outlet comprises an electromechanical drain valve.

The underlying idea of the multifunctional stationary boiling pan according to the present invention is that electromechanical drain valve is controlled by a servomotor. The servomotor is coupled to the control unit configured to detect and adjust the position of the drain valve between an open position and a closed position. Thus, the control unit regulates the position of the drain valve based on pre-programmed rules ensuring hygienic and safe working standards. This prevents accidental manual opening or closing of the drain valve. With these advantages, high hygiene and safety standards can be met (protection of food from foreign objects, safe and dry area next to the boiling pan).

The underlying idea of the multifunctional stationary boiling pan according to the present invention is further that the drain valve is coupled to a backup power supply (e.g. arranged in the servomotor) so that when the main power supply is switched off or disconnected, the drain valve does not remain in the open position but closes automatically.

In a preferred embodiment, the multifunctional stationary boiling pan further comprises a temperature sensor for measuring the temperature of a food ingredient.

In a preferred embodiment, the waste outlet is arranged in the side wall, not in the bottom, thus achieving a better distribution of heating elements in the bottom of the boiling pan and more even heating.

In a preferred embodiment, that the upper surface of the side walls comprises an outer circumferential protrusion and an inner circumferential recess, wherein the lid can rest on the inner circumferential recess and the inner circumferential recess comprises an additional waste outlet. This will allow condensed cooking steam to drain to the sewer, prevent the lid from inadvertently rising when the steam concentration is high during cooking, and provide a hermetically sealed lid with no openings.

In a preferred embodiment, the waste outlet and the additional waste outlet are connected to a common waste outlet that can be connected to the sewer. Any of said waste outlets may be blocked by a blocking element to prevent backflow of waste water in the event of a sewer failure.

In a preferred embodiment, the additional waste outlet or the common waste outlet comprises a vent outlet to ensure draining of non-condensed steam. The vent outlet may be provided with a screen to prevent insects from entering the waste outlet and the cooking vessel.

In a preferred embodiment, the depth of the inner circumferential recess is 5 to 15 mm, preferably 8 to 12 mm (e.g. 10 mm) and the diameter of the opening of the additional waste outlet may be 20 to 30 mm (e.g. 25 mm).

In a preferred embodiment, the lid for enclosing the cooking vessel is hinged between an open position and a closed position and a handle is attached to the lid for manually adjusting the lid position. The lid comprises a lid position sensor coupled to the control unit configured to detect the closed position of the lid and to subsequently decrease the temperature of the heating element. The advantages of temperature control by lid position are that the operator does not have to click on a touch screen, stop the cooking program or change the temperature already set on the display, thus saving unnecessary clicks, especially in emergency situations requiring a quick response (e.g., overheating oil, foaming milk, etc.). The advantage of the handle is that the lid can be closed quickly compared to semi-automatic closure (e.g. by continuously holding a button).

In a preferred embodiment, the control unit is further configured to detect the open position of the lid and to subsequently increase the temperature of the heating element to a value prior to decreasing, allowing the cooking program to be quickly resumed.

Another aspect of the present invention is a method for preparing food by the multifunctional stationary boiling pan having a control unit, an electromechanical drain valve controlled by a servomotor, and a temperature sensor, comprising the steps of:
a. inserting at least one ingredient into the cooking vessel and setting a cooking program in the control unit;
b. starting the cooking program by the control unit and switching on the heating element;
c. sending a signal by the control unit to the servomotor and locking the drain valve in the closed position for the duration of food preparation;
d. optionally, measuring the temperature of the ingredient with the temperature sensor, wherein if the temperature of the ingredient exceeds 105 °C (e.g. hot oil), blocking the drain valve in the closed position after the cooking program has finished (hot oil is not to be discharged into the sewer for safety reasons); and
e. after the power supply to the multifunctional stationary boiling pan is switched off from the main power supply (e.g. by 24 V DC), powering the drain valve by the backup power supply and locking it in the closed position.

The control unit, and therefore the cooking program settings, can be controlled via a graphical user interface, e.g. a touch screen or a display in combination with a keypad or a set of buttons.

When any cooking program is selected and then cooking is started, the drain valve closes automatically. If for some reason the valve does not lock in the closed position in step c. (e.g. due to food from a previous cooking program getting stuck in the valve), the control unit will send an error message (e.g. by displaying on the display), will not allow the cooking program to start and will switch off the heating element so that no further food preparation is discharged into the drain.

Another aspect of the present invention is a method for controlling heating by the multifunctional stationary boiling pan having a control unit, a hinged lid and a lid position sensor, comprising the steps of:
a. inserting at least one ingredient into the cooking vessel and setting the cooking program in the control unit;
b. starting the cooking program by the control unit and switching on the heating element;
c. lowering the lid to the closed position and detecting the closed position by the lid position sensor;
d. receiving a signal about the closed lid position from the lid position sensor to the control unit; and
e. sending a signal by the control unit to the heating element to decrease the temperature of the heating element.

If the temperature of the heating element before the lid is lowered is higher than 97 °C and a cooking program is set to prepare food, e.g. by boiling, gentle cooking or cooking of dairy products (i.e. a cooking program generally consisting in reaching a boiling point of 100 °C), the control unit sends a signal to the heating element to decrease the temperature to 97 °C, thereby preventing the boiling point of 100 °C (of water, milk, etc.). In this case, if the temperature of the heating element is less than or equal to 97 °C before the lid is lowered, no further decreasing of the temperature of the heating element occurs when the lid is lowered.

If the temperature of the heating element before the lid is lowered is higher than 150 °C and a cooking program is set to prepare food, e.g. by frying, deep-frying or grilling (i.e. a cooking program generally consisting in reaching a temperature of properly heated fat, higher than 150 °C), the control unit sends a signal to the heating element to decrease the temperature to 150 °C, thereby preventing the fat (oil, etc.) from reaching the temperature of overheating. In this case, if the temperature of the heating element is less than or equal to 150 °C before the lid is lowered, the temperature of the heating element will not be decreased further when the lid is lowered.

In a preferred embodiment, the method for controlling heating further comprises the following steps:
f. raising the lid to the open position and detecting the open position by the lid position sensor;
g. receiving a signal about the open lid position from the lid position sensor to the control unit; and
h. sending a signal by the control unit to the heating element to increase the temperature of the heating element to the temperature before the decrease in step d.

Another aspect of the present invention is a computer program product comprising instructions that cause the control unit to perform the steps b. to d. of the method for cooking food and/or steps b., d. and e., optionally further comprising steps g. and h., of the method for controlling heating.

Another aspect of the present invention is a computer readable medium on which the computer program product is stored, or a signal carrier carrying the computer program product.

### Description of the drawings

Figure 1 shows a perspective view of a multifunctional stationary boiling pan with an additional waste outlet in the inner circumferential recess.
Figure 2 shows a side sectional view of a multifunctional stationary boiling pan with an additional waste outlet, a common waste outlet and a vent outlet.
Figure 3 shows a perspective view of a multifunctional stationary boiling pan with a waste outlet containing a drain valve.
Figure 4 shows a block diagram of the drain valve connection.
Figure 5 shows a perspective view of a multifunctional stationary boiling pan with a hinged lid and handle.
Figure 6 shows a block diagram of the lid position sensor connection.

### Examples

### Example 1

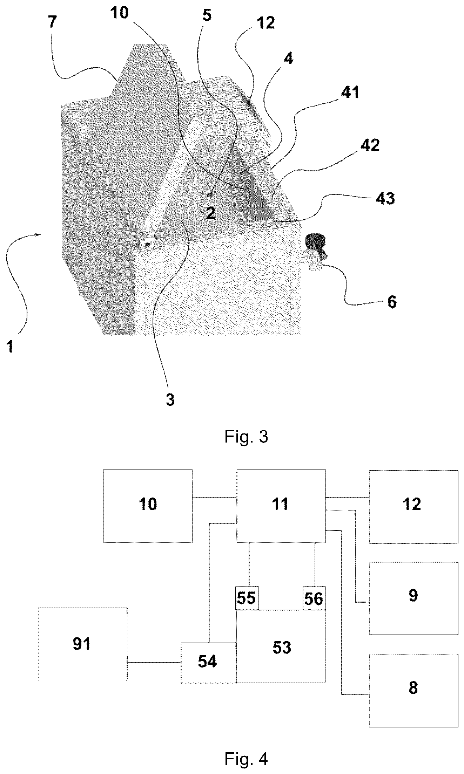

Figures 3 and 4 show a multifunctional stationary boiling pan 1 further comprising a control unit 11, and optionally a temperature sensor 10 (e.g. within one of the side walls 4), wherein the waste outlet 5 comprises an electromechanical drain valve 53 controlled by a servomotor 54. The servomotor 54 is coupled to the control unit 11 for detecting and adjusting the position of the drain valve 53 between an open position and a closed position. Detection is accomplished by means of two switches 55, 56 connected to the control unit 11, wherein actuation of the first switch 55 indicates the open position and actuation of the second switch 56 indicates the closed position. A control shaft of the drain valve 53 extends from the control unit 11 and is connected to the servomotor 54 and to a cam for switching the individual switches 55, 56. The drain valve 53, or the servomotor 54, is connected to a backup power supply 91. The control unit 11 is connected to a graphical user interface in the form of a touch screen 12.

In a first step, at least one ingredient is inserted in the cooking vessel 2 and a cooking program is set on the touch screen 12 in the control unit 11 (time, temperature, type of heat treatment - cooking, roasting, frying, grilling, sous-vide cooking, etc.). In a second step, the control unit 11 starts the food cooking program (i.e., sets the temperature of the heating element 8 and starts the time monitoring) using the computer program and turns on the heating element 8. In a third step, the computer program is then used by the control unit 11 to send a signal to the servomotor 54 to lock the drain valve 53 in the closed position for the duration of the food preparation. If for some reason the drain valve 53 does not lock in the closed position (e.g. due to food from a previous cooking program being stuck in the drain valve 53), the control unit 11 sends an error message (e.g. by displaying on the touch screen 12), does not allow the cooking program to start and switches off the heating element 8.

Optionally, in a fourth step, the temperature of the ingredient is measured by the temperature sensor 10, wherein if the temperature of the ingredient exceeds 105 °C (e.g. hot oil), the drain valve 53 is locked in the closed position by the computer program even after the food preparation is finished. Unblocking is achieved by measuring the temperature of the ingredient (hot oil) dropping below 105 °C by the temperature sensor 10 and then unblocking the drain valve 53 by the control unit 11 using the computer program. Optionally, unblocking is additionally achieved by user input to the control unit 11 by confirming that the ingredient (hot oil) has been removed from the cooking vessel 2 (e.g. using a scraper and through the food outlet 6).

### Example 2

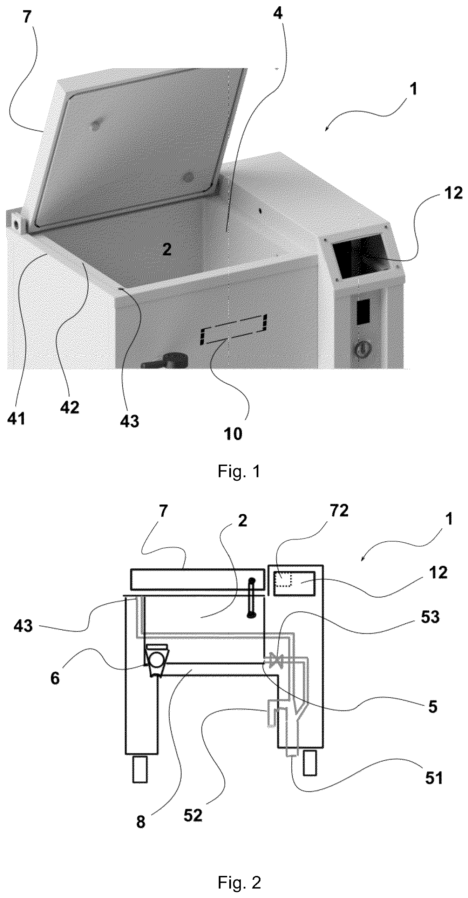

In accordance with Example 1, Figure 1 shows a multifunctional stationary boiling pan 1 comprising: a cooking vessel 2 defined by a bottom 3 and side walls 4; a waste outlet 5; a food outlet 6; a lid 7 for enclosing the cooking vessel 2; a heating element 8 for heating the cooking vessel 2; and a main power supply 9. The upper surface of the side walls 4 comprises an outer circumferential protrusion 41 and an inner circumferential recess 42 (e.g. 10 mm deep). The lid 7 can rest on the inner circumferential recess 42, and an additional waste outlet 43 (e.g. with a 25 mm diameter opening) is provided in the inner circumferential recess 42. Figure 2 shows the waste outlet 5 and the additional waste outlet 43 connected to a common waste outlet 51, which includes a vent outlet 52 fitted with a screen and which is connectable to the sewer (e.g. by an inner diameter pipe with a nominal clearance of DN 50).

### Example 3

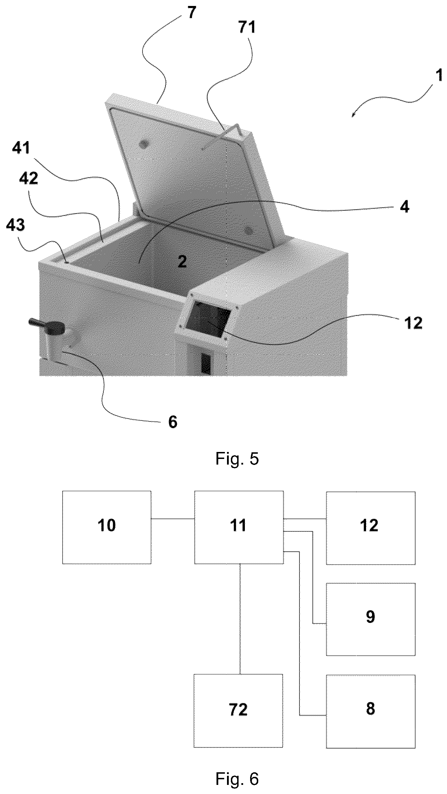

In accordance with Example 1 or Example 2, Figures 5 and 6 show a multifunctional stationary boiling pan 1 further comprising a control unit 11, a hinged lid 7 for enclosing the cooking vessel 2 between an open position and a closed position, and a handle 71 attached to the lid 7 for manually adjusting the position of the lid 7. The lid 7 further comprises a lid position sensor 72 (Figure 2) coupled to the control unit 11 configured to detect the closed position of the lid 7 and to subsequently decrease the temperature of the heating element 8, and further configured to detect the open position of the lid 7 and to subsequently increase the temperature of the heating element 8 to a value prior to decreasing. The lid position sensor 72 may be an electromechanical terminal switch with a step switching member, such as a Schneider terminal switch type XCKN2149P20.

In a first step, at least one ingredient is inserted in the cooking vessel 2 and the cooking program is set on the touch screen 12 in the control unit 11 (time, temperature, type of heat treatment - cooking, roasting, frying, grilling, sous-vide cooking, etc.). In a second step, the control unit 11 uses a computer program to start the food cooking program (i.e. sets the temperature of the heating element 8 and starts time monitoring) and turns on the heating element 8. In a third step, if the temperature of the heating element 8 is higher than 97 °C (which can be detected by the temperature sensor 10) and the cooking program is set to prepare food, e.g. by boiling, gentle cooking or cooking of dairy products, or if the temperature of the heating element 8 is higher than 150 °C (which can be detected by the temperature sensor 10) and a cooking program is set to prepare food, e.g. by frying, deep frying or grilling, the lid 7 is then lowered to the closed position, which is detected by the lid position sensor 72. In a fourth step, the control unit 11 receives a signal about the closed position of the lid 7 from the lid position sensor 72 by means of a computer program. Then, in a fifth step, the control unit 11 sends a signal by means of the computer program to the heating element 8 to decrease the temperature of the heating element 8 to 97 °C or 150 °C, respectively, without the need for manual input of a change in the cooking program.

Optionally, in a sixth step, the lid 7 is raised to the open position, which is detected by the lid position sensor 72. In a seventh step, the control unit 11 receives, by means of a computer program, a signal about the open position of the lid 7 from the lid position sensor 72. Subsequently, in an eighth step, the computer program control unit 11 sends a signal by means of the computer program to the heating element 8 to increase the temperature of the heating element 8 to the temperature prior to decreasing in the fourth step, i.e. to an initial temperature greater than 97 °C or greater than 150 °C, without the need to reenter or change the food cooking program.

### Industrial applicability

The multifunctional stationary boiling pan described herein can be used in the catering industry.

### List of reference signs

- 1: boiling pan
- 2: cooking vessel
- 3: bottom
- 4: side wall
- 5: waste outlet
- 6: food outlet
- 7: lid
- 8: heating element
- 9: main power supply
- 10: temperature sensor
- 11: control unit
- 12: touch screen
- 41: outer circumferential protrusion
- 42: inner circumferential recess
- 43: additional waste outlet
- 51: common waste outlet
- 52: vent outlet
- 53: drain valve
- 54: servomotor
- 55: first switch
- 56: second switch
- 71: handle
- 72: lid position sensor
- 91: backup power supply

## Claims

1. A multifunctional stationary boiling pan (1), comprising: a cooking vessel (2) defined by a bottom (3) and side walls (4); a waste outlet (5); a food outlet (6); a lid (7) for enclosing the cooking vessel (2); a heating element (8) for heating the cooking vessel (2); a main power supply (9); and a control unit (11); wherein the waste outlet (5) comprises an electromechanical drain valve (53), **characterised in that** the electromechanical drain valve (53) is controlled by a servomotor (54), wherein the servomotor (54) is coupled to the control unit (11) configured to detect and adjust the position of the drain valve (53) between an open position and a closed position, wherein the drain valve (53) is coupled to a backup power source (91).

2. The multifunctional stationary boiling pan (1) according to claim 1, **characterised in that** it further comprises a temperature sensor (10) for measuring the temperature of a food ingredient.

3. The multifunctional stationary boiling pan (1) according to claim 1 or 2, **characterised in that** the waste outlet (5) is arranged in the side wall (4).

4. The multifunctional stationary boiling pan (1) according to any one of the preceding claims, **characterised in that** the upper surface of the side walls (4) comprises an outer circumferential protrusion (41) and an inner circumferential recess (42), wherein the lid (7) can rest on the inner circumferential recess (42), wherein the inner circumferential recess (42) comprises an additional waste outlet (43).

5. The multifunctional stationary boiling pan (1) according to claim 4, **characterized in that** the waste outlet (5) and the additional waste outlet (43) are connected to a common waste outlet (51).

6. The multifunctional stationary boiling pan (1) according to claim 4 or 5, **characterized in that** the additional waste outlet (43) or the common waste outlet (51) comprises a vent outlet (52).

7. The multifunctional stationary boiling pan (1) according to any one of claims 4 to 6, **characterized in that** the depth of the inner circumferential recess (42) is 5 to 15 mm, preferably 8 to 12 mm.

8. The multifunctional stationary boiling pan (1) according to any one of the preceding claims, **characterised in that** the lid (7) for enclosing the cooking vessel (2) is hinged between an open position and a closed position and a handle (71) is attached to the lid (7) for manually adjusting the position of the lid (7), wherein the lid (7) comprises a lid position sensor (72) coupled to the control unit (11) configured to detect the closed position of the lid (7) and to subsequently decrease the temperature of the heating element (8).

9. The multifunctional stationary boiling pan (1) according to claim 8, **characterized in that** the control unit (11) is further configured to detect the open position of the lid (7) and to subsequently increase the temperature of the heating element (8) to a value prior to decreasing.

10. A method for preparing food by the multifunctional stationary boiling pan (1) according to any one of the preceding claims, wherein it comprises the steps of:
a. inserting at least one ingredient into the cooking vessel (2) and setting a cooking program in the control unit (11);
b. starting the cooking program by the control unit (11) and switching on the heating element (8);
**characterised in that** it comprises the steps of:
c. sending a signal by the control unit (11) to the servomotor (54) and locking the drain valve (53) in the closed position for the duration of food preparation;
d. optionally, measuring the temperature of the ingredient with the temperature sensor (10), wherein if the temperature of the ingredient exceeds 105 °C, blocking the drain valve (53) in the closed position after the cooking program has finished; and
e. after the power supply to the multifunctional stationary boiling pan (1) is switched off from the main power supply (9), powering the drain valve (53) by the backup power supply (91) and locking it in the closed position.

11. A computer program product comprising instructions that cause the control unit (11) of the multifunctional stationary boiling pan (1) according to any one of claims 2 to 9 when dependent on claim 2 to perform the steps b. to d. of the method according to claim 10.

12. A computer readable medium on which the computer program product according to claim 11 is stored, or a carrier signal carrying the computer program product according to claim 11.

## Patentansprüche

1. Eine multifunktionelle stationäre Kochpfanne (1), umfassend: einen Kochbehälter (2), der durch einen Boden (3) und Seitenwände (4) definiert wird; einen Abfallauslass (5); einen Speiseauslass (6); einen Deckel (7) zum Verschließen des Kochbehälters (2); ein Heizelement (8) zum Erhitzen des Kochbehälters (2); eine Hauptstromversorgung (9); und eine Steuereinheit (11); wobei der Abfallauslass (5) ein elektromechanisches Ablassventil (53) umfasst, **dadurch gekennzeichnet, dass** das elektromechanische Ablassventil (53) von einem Servomotor (54) gesteuert wird, wobei der Servomotor (54) mit der Steuereinheit (11) gekoppelt ist, die so konfiguriert ist, dass sie die Position des Ablassventils (53) zwischen einer offenen Position und einer geschlossenen Position erfasst und einstellt, wobei das Ablassventil (53) mit einer Notstromquelle (91) gekoppelt ist.

2. Die multifunktionelle stationäre Kochpfanne (1) nach Anspruch 1, **dadurch gekennzeichnet, dass** er ferner einen Temperatursensor (10) zum Messen der Temperatur einer Lebensmittelzutat umfasst.

3. Die multifunktionelle stationäre Kochpfanne (1) nach Anspruch 1 oder 2, **dadurch gekennzeichnet, dass** der Abfallauslass (5) in der Seitenwand (4) angeordnet ist.

4. Die multifunktionelle stationäre Kochpfanne (1) nach einem der vorstehenden Ansprüche, **dadurch gekennzeichnet, dass** die Oberseite der Seitenwände (4) einen äußeren Umfangsvorsprung (41) und eine innere Umfangsausnehmung (42) aufweist, wobei der Deckel (7) auf der inneren Umfangsausnehmung (42) aufliegen kann, wobei die innere Umfangsausnehmung (42) einen zusätzlichen Abfallauslass (43) aufweist.

5. Die multifunktionelle stationäre Kochpfanne (1) nach Anspruch 4, **dadurch gekennzeichnet, dass** der Abfallauslass (5) und der zusätzliche Abfallauslass (43) mit einem gemeinsamen Abfallauslass (51) verbunden sind.

6. Die multifunktionelle stationäre Kochpfanne (1) nach Anspruch 4 oder 5, **dadurch gekennzeichnet, dass** der zusätzliche Abfallauslass (43) oder der gemeinsame Abfallauslass (51) einen Entlüftungsauslass (52) aufweist.

7. Die multifunktionelle stationäre Kochpfanne (1) nach einem der Ansprüche 4 bis 6, **dadurch gekennzeichnet, dass** die Tiefe der inneren Umfangsausnehmung (42) 5 bis 15 mm, vorzugsweise 8 bis 12 mm, beträgt.

8. Die multifunktionelle stationäre Kochpfanne (1) nach einem der vorstehenden Ansprüche, **dadurch gekennzeichnet, dass** der Deckel (7) zum Verschließen des Kochbehälters (2) zwischen einer offenen Position und einer geschlossenen Position schwenkbar ist und ein Griff (71) am Deckel (7) angebracht ist, um die Position des Deckels manuell einzustellen, wobei der Deckel (7) einen Deckelpositionssensor (72) umfasst, der mit der Steuereinheit (11) gekoppelt ist, die so konfiguriert ist, dass sie die geschlossene Position des Deckels (7) erfasst und daraufhin die Temperatur des Heizelements (8) verringert.

9. Die multifunktionelle stationäre Kochpfanne (1) nach Anspruch 8, **dadurch gekennzeichnet, dass** die Steuereinheit (11) ferner so konfiguriert ist, dass sie die geöffnete Position des Deckels (7) erfasst und anschließend die Temperatur des Heizelements (8) auf einen Wert vor der Verringerung erhöht.

10. Ein Verfahren zur Speisenzubereitung mittels der multifunktionellen stationären Kochpfanne (1) nach einem der vorstehenden Ansprüche, wobei es die folgenden Schritte umfasst:
a. Einfüllen mindestens einer Zutat in den Kochbehälter (2) und Einstellen eines Kochprogramms in der Steuereinheit (11);
b. Starten des Kochprogramms durch die Steuereinheit (11) und Einschalten des Heizelements (8);
**dadurch gekennzeichnet, dass** es die folgenden Schritte umfasst:
c. Senden eines Signals durch die Steuereinheit (11) an den Servomotor (54) und Verriegeln des Ablassventils (53) in der geschlossenen Position für die Dauer der Speisenzubereitung;
d. optional, das Messen der Temperatur der Zutat mit dem Temperatursensor (10), wobei, falls die Temperatur der Zutat 105 °C überschreitet, das Ablassventil (53) nach Beendigung des Kochprogramms in der geschlossenen Position arretiert wird; und
e. nach dem Abschalten der Stromversorgung der multifunktionellen stationären Kochpfanne (1) von der Hauptstromversorgung (9) das Ablassventil (53) über die Notstromversorgung (91) mit Strom versorgen und es in der geschlossenen Position verriegeln.

11. Ein Computerprogrammprodukt, das Anweisungen umfasst, die die Steuereinheit (11) der multifunktionellen stationären Kochpfanne (1) nach einem der Ansprüche 2 bis 9, sofern auf Anspruch 2 gestützt, veranlassen, die Schritte b. bis d. des Verfahrens nach Anspruch 10 auszuführen.

12. Ein computerlesbares Medium, auf dem das Computerprogrammprodukt nach Anspruch 11 gespeichert ist, oder ein Trägersignal, das das Computerprogrammprodukt nach Anspruch 11 trägt.

## Revendications

1. Une casserole d'ébullition stationnaire multifonctionnelle (1), comprenant : un récipient de cuisson (2) défini par un fond (3) et des parois latérales (4) ; une sortie de déchets (5) ; une sortie d'aliments (6) ; un couvercle (7) destiné à recouvrir le récipient de cuisson (2) ; un élément chauffant (8) destiné à chauffer le récipient de cuisson (2) ; une alimentation électrique principale (9) ; et une unité de commande (11) ; où la sortie de déchets (5) comprend une vanne de vidange électromécanique (53), **caractérisée en ce que** la vanne de vidange électromécanique (53) est commandée par un servomoteur (54), où le servomoteur (54) est couplé à l'unité de commande (11) configurée pour détecter et ajuster la position de la vanne de vidange (53) entre une position ouverte et une position fermée, où la vanne de vidange (53) est couplée à une source d'alimentation de secours (91).

2. La casserole d'ébullition stationnaire multifonctionnelle (1) selon la revendication 1, **caractérisée en ce qu'**elle comprend en outre un capteur de température (10) destiné à mesurer la température d'un ingrédient alimentaire.

3. La casserole d'ébullition stationnaire multifonctionnelle (1) selon la revendication 1 ou 2, **caractérisée en ce que** la sortie de déchets (5) est disposée dans la paroi latérale (4).

4. La casserole d'ébullition stationnaire multifonctionnelle (1) selon l'une quelconque des revendications précédentes, **caractérisée en ce que** la surface supérieure des parois latérales (4) comprend une saillie circonférentielle extérieure (41) et un renfoncement circonférentiel intérieur (42), où le couvercle (7) peut reposer sur le renfoncement circonférentiel intérieur (42), où le renfoncement circonférentiel intérieur (42) comprend une sortie de déchets supplémentaire (43).

5. La casserole d'ébullition stationnaire multifonctionnelle (1) selon la revendication 4, **caractérisée en ce que** la sortie de déchets (5) et la sortie de déchets supplémentaire (43) sont reliées à une sortie de déchets commune (51).

6. La casserole d'ébullition stationnaire multifonctionnelle (1) selon la revendication 4 ou 5, **caractérisée en ce que** la sortie de déchets supplémentaire (43) ou la sortie de déchets commune (51) comprend une sortie de purge (52).

7. La casserole d'ébullition stationnaire multifonctionnelle (1) selon l'une quelconque des revendications 4 à 6, **caractérisée en ce que** la profondeur du renfoncement circonférentiel intérieur (42) est de 5 à 15 mm, de préférence de 8 à 12 mm.

8. La casserole d'ébullition stationnaire multifonctionnelle (1) selon l'une quelconque des revendications précédentes, **caractérisée en ce que** le couvercle (7) destiné à recouvrir le récipient de cuisson (2) est articulé entre une position ouverte et une position fermée et qu'une poignée (71) est fixée au couvercle (7) pour ajuster manuellement la position du couvercle (7), où le couvercle (7) comprend un capteur de position de couvercle (72) couplé à l'unité de commande (11) configurée pour détecter la position fermée du couvercle (7) et pour diminuer ensuite la température de l'élément chauffant (8).

9. La casserole d'ébullition stationnaire multifonctionnelle (1) selon la revendication 8, **caractérisée en ce que** l'unité de commande (11) est en outre configurée pour détecter la position ouverte du couvercle (7) et pour augmenter ensuite la température de l'élément chauffant (8) jusqu'à une valeur antérieure à la diminution.

10. Un procédé de préparation d'aliments à l'aide de la casserole d'ébullition stationnaire multifonctionnelle (1) selon l'une quelconque des revendications précédentes, comprenant les étapes suivantes :
a. introduire au moins un ingrédient dans le récipient de cuisson (2) et régler un programme de cuisson dans l'unité de commande (11) ;
b. lancer le programme de cuisson à l'aide de l'unité de commande (11) et mettre en marche l'élément chauffant (8) ;
**caractérisé en ce qu'**il comprend les étapes suivantes :
c. envoyer un signal par l'unité de commande (11) au servomoteur (54) et verrouiller la vanne de vidange (53) en position fermée pendant toute la durée de la préparation des aliments ;
d. optionnellement, mesurer la température de l'ingrédient à l'aide du capteur de température (10), où, si la température de l'ingrédient dépasse 105 °C, bloquer la vanne de vidange (53) en position fermée une fois le programme de cuisson terminé ; et
e. une fois que l'alimentation électrique de la casserole d'ébullition stationnaire multifonctionnelle (1) a été coupée par l'alimentation principale (9), alimenter la vanne de vidange (53) par l'alimentation de secours (91) et la verrouiller en position fermée.

11. Un produit logiciel comprenant des instructions qui amènent l'unité de commande (11) de la casserole d'ébullition stationnaire multifonctionnelle (1) selon l'une quelconque des revendications 2 à 9, lorsqu'elle dépend de la revendication 2, à exécuter les étapes b. à d. du procédé selon la revendication 10.

12. Un support lisible par ordinateur sur lequel est stocké le produit logiciel selon la revendication 11, ou un signal porteur transportant le produit logiciel selon la revendication 11.
